# EUROPEAN PATENT SPECIFICATION

(11) **EP 1 947 003 B1**
(45) Date of publication and mention of the grant of the patent: **08.12.2010**
(21) Application number: 07001076.4
(22) Date of filing: 18.01.2007
(51) Int. Cl.: B62M 11/16

(54) **Hub transmission for a bicycle and method for shifting such a hub transmission**
Antriebsnabe für ein Fahrrad und Verfahren zum Schalten einer derartigen Antriebsnabe
Moyeu d'entraînement pour bicyclette et procédé pour commander le changement de vitesse d'un tel moyeu d'entraînement

(43) Date of publication of application: 23.07.2008
(73) Proprietor: SHIMANO INC., Sakai-shi, Osaka 590-8577 (JP)
(72) Inventor: Fukui, Seiji, Sakai-shi, Osaka 590-8577 (JP); Kawamura, Shinji, Sakai-shi, Osaka 590-8577 (JP)
(74) Representative: Sajda, Wolf E.

(56) References cited:
- EP-A- 0 537 693
- EP-A2- 0 763 461
- EP-A2- 1 323 627
- WO-A-99/36307
- AT-B- 306 536
- JP-A- 54 101 050
- US-A- 3 608 398
- US-A- 5 964 679

## Description

The present invention relates to a hub transmission for a bicycle according to the preamble portion of claim 1. A hub transmission of this kind is known for example from EP 1 323 627 A2. The invention further relates to a method for shifting such a hub transmission.

Internally-mounted multi-speed hub transmissions form part of the rear wheel of a bicycle and include a hub axle that is mounted to the bicycle frame, a driver rotatably supported by the hub axle for receiving a pedalling force, and a hub shell rotatably supported by the hub axle. A power transmission mechanism is disposed between the driver and the hub shell for communicating rotational power from the driver to the hub shell through a plurality of power transmission paths. The hub transmission further comprises a shift mechanism that cooperates with the power transmission mechanism for selecting one of the plurality of power transmission paths.

The power transmission mechanism ordinarily comprises a planetary gear mechanism including several sun gears, at least one ring gear and a planet gear carrier each of which is rotatably supported by the hub axle. A plurality of planet gears is rotatably supported by the planet gear carrier meshing with the sun gears and the ring gears. To change the power transmission paths and the corresponding gear ratios, the aforementioned various gear components are selectively non-rotatably coupled with each other by actuating the shift mechanism.

The hub transmission according to EP 1 323 627 A2 is configured to provide for 8 speed stages wherein - for speed stages 5 to 8 - the driver is coupled with the planet gear carrier by means of a clutch and - for speed stages 1 to 4 - the driver is uncoupled from the planet gear carrier. This change of the power transmission path when shifting between speed stages 4 and 5 is problematic in view of a desired shock-less shifting. To alleviate this problem, EP 1 323 627 A2 proposes a particular timing of the coupling mechanisms that includes a shifting transition sequence. That is, when the bicycle is accelerating and the cyclist shifts from speed stage 4 to speed stage 5, the planetary gear mechanism is actuated to produce gear ratios corresponding to speed stages 3 and 7 prior to completing the shift to speed stage 5. Thereby, an undesired rapid acceleration of the pedals and a significant shock is avoided when the transmission completes the shift to speed stage 5.

When the bicycle is decelerating and the cyclist shifts from speed stage 5 to speed stage 4, a temporary transition from speed stage 5 to speed stage 7 and then to speed stage 3 prior to completing the shift to speed stage 4 is carried out to avoid a rapid deceleration of the pedals.

While the aforementioned shifting transition sequence reduces excessive acceleration or deceleration of the pedals when shifting between speed stages 4 and 5, the cyclist still feels a (reduced) shifting shock that still causes undesired discomfort.

The document US-A-5 964 679 discloses a further hub transmission for a bicycle on which the preamble of patent claim 1 is based.

It is an object of the invention to provide a hub transmission that is improved with respect to a shock-less shifting of the transmission. Moreover, it is an object of the invention to provide a method for shifting such a hub transmission.

In accordance with the invention, these objects are solved by means of a hub transmission according to claim 1 and a method according to claim 19.

The invention is based on the idea to provide a hub transmission for a bicycle that comprises a hub axle, a driver rotatably supported by the hub axle, a hub shell rotatably supported by the hub axle, a power transmission mechanism disposed between the driver and the hub shell for communicating rotational power from the driver to the hub shell through a plurality of power transmission paths and a shift mechanism for selecting one of the plurality of power transmission paths. The hub transmission according to the present invention further comprises a power transmission auxiliary mechanism disposed between the driver and the hub shell for communicating rotational power from the driver to the hub shell.

The hub transmission of the present invention provides the benefit that the power transmission auxiliary mechanism allows to establish a power transmission auxiliary path for communicating the rotational power from the driver to the hub shell, thereby circumventing the power transmission mechanism. Thus, the power transmission auxiliary mechanism functions as a bypass that continues transmitting rotational power from the driver to the hub shell with the effect that the power transmission mechanism can be shifted in an unloaded state. Since the power transmission mechanism does not communicate rotational power from the driver to the hub shell and, thus, is not effective when shifting between two speed stages, undesired shifting shocks and rapid acceleration/deceleration of the pedals are avoided.

Moreover, the improved shock-less, or at least shock-reduced, shifting can be achieved according to the invention without applying a complicated shifting transition sequence. Rather, the desired effect is achieved by means of a relatively simple and compact structure.

Preferably the power transmission auxiliary mechanism comprises a power transmission unit for coupling the driver to the hub shell and a clutch unit for actuating the power transmission unit. This configuration has the advantage that the power transmission auxiliary mechanism can be coupled/uncoupled with components of the power transmission mechanism, for example a planet gear carrier.

To achieve a compact design of the hub transmission, the power transmission auxiliary mechanism may comprise at least one pawl coupled to the driver and a pawl engaging device, in particular a ratchet ring coupled to the hub shell wherein the pawl and the pawl engaging device, in particular the ratchet ring are engageable to transmit rotational power. The pawl can be rotatably movably supported by the driver which allows to engage/disengage the pawl with the ratchet ring in different positions. The pawl may be axially movably supported by the driver. Alternatively, the pawl may be axially fixed to the driver. The axially movable arrangement and the axially fixed arrangement of the rotatably movable pawl provide two different designs to actuate the power transmission auxiliary mechanism, in particular to engage/disengage the power transmission unit and the clutch unit.

Preferably, the ratchet ring comprises a friction rotating body including a plurality of ratchet teeth on an inner peripheral surface of the friction rotating body. In particular, in conjunction with a friction spring that is connected to the friction rotating body and that is disposed between the friction rotating body and the hub shell, this embodiment has the advantage that the friction rotation body can be locked/unlocked with the hub shell, and a power transmission path between the driver and the hub shell is established or interrupted.

Preferably, the clutch unit comprises a control ring that is coupled to the shift mechanism and movably disposed for coupling and decoupling with the transmission auxiliary mechanism. By means of the control ring it is possible to actuate the power transmission auxiliary mechanism through the clutch unit by moving the shift mechanism. The control ring may be rotatably and axially movably disposed relative to the hub axle. More particularly, the control ring may be supported by a differential rotation body wherein the control ring is rotatably movable relative to the differential rotation body. The differential rotation body may be axially movable relative to the hub axle. Thereby, the control ring is allowed to rotate and axially move which provides for a flexible operation of the power transmission auxiliary mechanism.

Preferably, the control ring is axially fixed to the differential rotation body. The axially fixed control ring is suitable to be used in one embodiment according to which the pawl is axially movably supported by the driver. Thereby, the axial relative movement between the pawl and the control ring for the engagement/disengagement function is effected by the pawl.

Alternatively, the control ring may be axially movable relative to the differential rotation body. The axially movable control ring is suitable to be combined with another embodiment according to which the pawl is axially fixed to the driver. Thereby, the axial relative movement between the control ring and the pawl for the engagement/disengagement function is effected by the control ring.

To support the disengagement function of the power transmission auxiliary mechanism, the control ring and the differential rotational body may comprise rotation limiting means that stop a rotational movement of the control ring. The control ring can be biased in a circumferential and axial direction which allows to return the control ring to an initial position both with respect to the rotational and axial movement of the control ring.
The clutch unit preferably comprises a clutch ring engagable with a planet gear carrier of the power transmission mechanism wherein the clutch ring and the differential rotational body are coupled and axially movable. This embodiment has the effect to correlate the operation of the power transmission auxiliary mechanism with various speed stages that can be produced by the power transmission mechanism.

As regards the inventive method, the invention comprises the idea to select one of a plurality of power transmission paths of a power transmission mechanism wherein a power transmission auxiliary path is established during shifting such that the power transmission path is selected in a substantially unloaded state of the power transmission mechanism.

The invention will now be described by way of example and with reference to the accompanying drawings in which:
- Fig. 1: is a longitudinal cross-sectional view of a hub transmission according to an embodiment of the invention;
- Fig. 2a: is a partial view of a hub transmission similar to the hub transmission according to Fig. 1, wherein the power transmission auxiliary mechanism is in an initial position for speed stages 5 to 8;
- Fig. 2b: is a plan view of the power transmission auxiliary mechanism in the state according to Fig. 2a;
- Fig. 3a: illustrates the hub transmission according to Fig. 2a wherein the control ring of the power transmission auxiliary mechanism contacts the pawl;
- Fig. 3b: is a plan view of the power transmission auxiliary mechanism in the state according to Fig. 3a;
- Fig. 4a: illustrates the hub transmission according to Fig. 2a wherein the pawls of the power transmission auxiliary mechanism are in a side end position;
- Fig. 4b: is a plan view of the power transmission auxiliary mechanism in the state according to Fig. 4a;
- Fig. 5a: illustrates the hub transmission in a state wherein the pawls of the power transmission auxiliary mechanism are in an intermediate position;
- Fig. 5b: is a plan view of the power transmission auxiliary mechanism in the state according to Fig. 5a;
- Fig. 5c: is a plan view of the power transmission auxiliary mechanism in a state according to Fig. 5a wherein the control ring is rotated;
- Fig. 6a: illustrates the hub transmission according to Fig. 2a in a state wherein the pawls of the power transmission auxiliary mechanism are in an intermediate position and disengaged;
- Fig. 6b: is a plan view of the power transmission auxiliary mechanism in the state according to Fig. 6a;
- Fig. 7a: illustrates the hub transmission according to Fig. 2a wherein the pawls are in an initial position for speed stages 1 to 4;
- Fig. 7b: is a plan view of the power transmission auxiliary mechanism in the state according to Fig. 7a;
- Fig. 8a to 8c: illustrate different positions of the control ring relative to the pawls of the power transmission auxiliary mechanism;
- Fig. 9: is a partial view of a hub transmission according to another embodiment, wherein the power transmission auxiliary mechanism is in an initial position for speed stages 5 to 8;
- Fig. 10: illustrates the hub transmission according to Fig. 9 wherein the clutch unit and the power transmission unit begin to engage;
- Fig. 11: illustrates the hub transmission according to Fig. 9 wherein the clutch unit is in an intermediate position;
- Fig. 12: illustrates the hub transmission according to Fig. 9 wherein the clutch unit is in an initial position for speed stages 1 to 4;
- Fig. 13a to 13c: are perspective views of the differential rotational body;
- Fig. 14a to 14c: are perspective views of the control ring; and
- Fig. 15a to 15b: are perspective views of the driver.

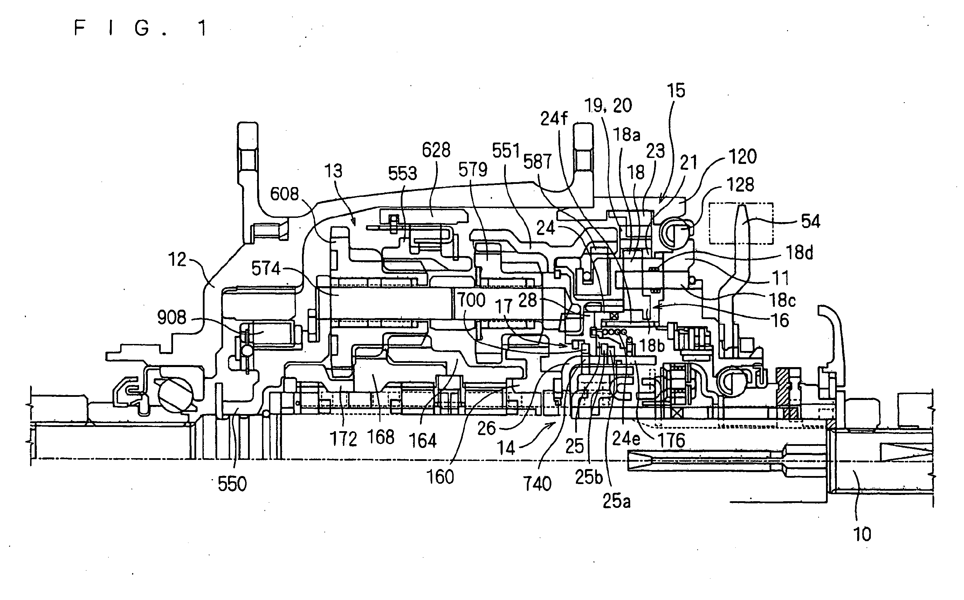

Fig. 1 is a longitudinal cross-sectional view of an embodiment of an inventive hub transmission that is mounted to the rear wheel of a bicycle. The hub transmission includes a hub axle 10, a driver 11 and a hub shell 12 each of which are rotatably supported by hub axle 10. The hub transmission further includes a power transmission mechanism 13 that is disposed between driver 11 and hub shell 12. In operation, the power transmission mechanism transmits rotational power from driver 11 to hub shell 12 through a plurality of power transmission paths that can be selected by means of a shift mechanism 14.

As an additional means to transmit rotational power from the driver 11 to the hub shell 12, a power transmission auxiliary mechanism 15 is provided that is disposed between the driver 11 and the hub shell 12. As will be explained in more detail, the power transmission auxiliary mechanism 15 serves as a bypass that allows to maintain a power transmission path while the power transmission mechanism is released and can be shifted from one speed stage to another speed stage in an unloaded state. Thereby, the shifting comfort of the hub transmission is significantly improved and shifting shocks are avoided.

The rotational force is transmitted to the hub transmission by means of a chain (not shown) and a sprocket 54 that is coupled to driver 11. On the side of driver 11, a (right) cup 120 is non-rotatably fitted to an inner periphal surface of hub shell 12. Cup 120 rotatably supports hub shell 12 on driver 11 through ball bearings 128. Power transmission mechanism 13 corresponds to the power transmission mechanism described in EP 1 323 627 A2 in great detail. Shift mechanism 14 corresponds to the shift mechanism described in EP 1 323 627 A2 and US 6 607 465 B1 mentioned therein. In the following, the structure of power transmission mechanism 13 and shift mechanism 14 is explained as far as necessary for a proper understanding of the invention.

Power transmission mechanism 13 comprises four sun gears 160, 164, 168, 172. First sun gear 160 is non-rotatably connected to hub axle 10. Second, third and fourth sun gears 164, 168, 172 are rotatably supported by axle 10 and can be selectively locked by means of pawls in a known manner. Shift mechanism 14 is adapted to selectively actuate the pawls by means of a shift control sleeve as described in detail in EP 1 323 627 A2 as well as in US 6 607 465 B1.

Power transmission mechanism 13 further comprises a planet gear carrier 550, a first ring gear 551 and a second ring gear 553, all of which are rotatably mounted on axle 10. Planet gear carrier 550 comprises a plurality (e.g., three) of master pinion pins 574 that are rotatably supported by planet gear carrier 550. Each master pinion pin 574 supports two planet gears 579, 608. First planet gear 579 has two different diameter gear portions, one of which meshes with first sun gear 160 and the other one with first ring gear 551. Second planet gear 608 has three different diameter gear portions that mesh with second, third and fourth sun gears 164, 168, 172.

The smallest gear portion of second planet gear 608 also meshes with second ring gear 553. Planet gear carrier 550 is coupled to hub shell 12 by means of a coupling mechanism 908. Second ring gear 553 is coupled to hub shell 12 by means of a roller clutch 628.

To transmit rotational power from driver 11 to power transmission mechanism 13, driver 11 meshes with clutch ring 28 that is engageable with an end of planet gear carrier 550 distant from coupling mechanism 908. In addition thereto, driver 11 meshes with first ring gear 551 by means of pawls 587 that are circumferentially mounted on an outer peripheral surface of driver 11. To engage and release clutch ring 28 a shift key member 700 comprising radially inwardly extending cam followers 740 is provided.

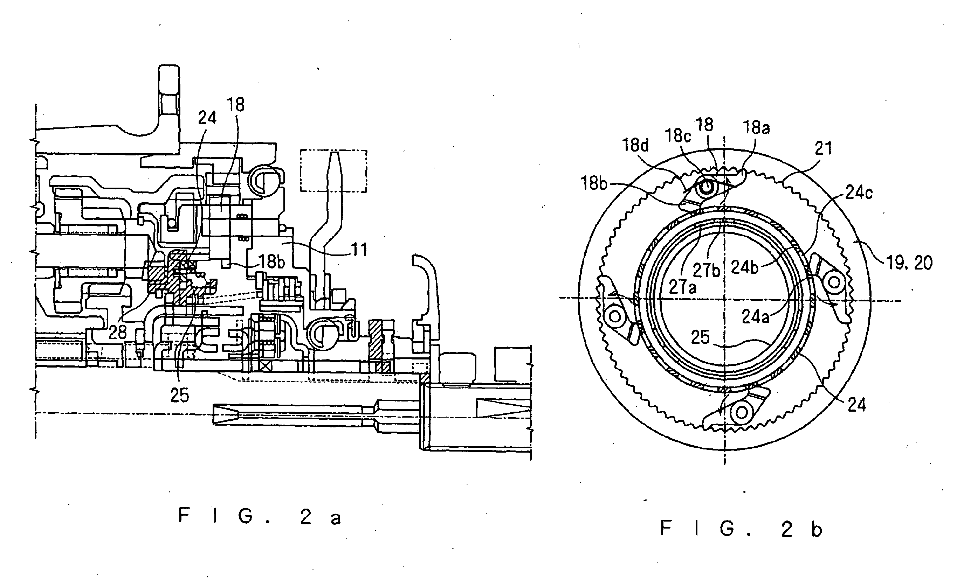

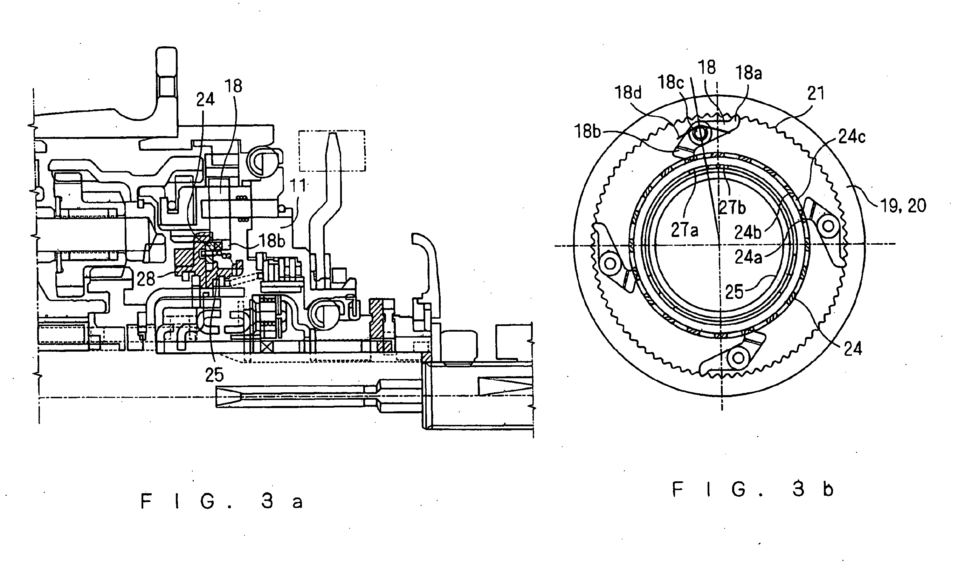

Cam followers 740 are guided in a clutch cam portion 176 of first sun gear 160 that includes a first and second cam step (no reference signs). Clutch cam portion 176 forms part of feed cam 26. When shift key member 700 is rotated, cam followers 740 move in feed cam 26 between first and second cam steps as shown in Figures 2a and 3a. Thereby, clutch ring 28 can be axially moved to disengage/engage clutch ring 28 with planet gear carrier 550 (engaged state: Fig. 2a; disengaged state: Fig. 3a).

Shift key member 700 is actuated by means of shift mechanism 14 as described in detail in EP 1 323 627 A2.

For speed stages 1 to 4, clutch ring 28 is disengaged from planet gear carrier 550. Consequently, the rotational power is transmitted from driver 11 over pawl 587 to first ring gear 551 and planet gear carrier 550. For speed stages 5 to 8, clutch ring 28 is engaged with planet gear carrier 550 and the rotational power is transmitted from driver 11 over clutch ring 28 to planet gear carrier 550. An overview over the specific power transmission paths for each speed stage are shown in following Table 1.

**Table 1**

| Speed Stage | Power Transmission Path |
|---|---|
| 1 | Driver 11 ,Pawl 587, First Ring Gear 551, Planet Gear Carrier 550 (planet gear 579 rotates around first sun gear 160), Pawl 908, Hub Shell 12 |
| 2 | Driver 11, Pawl 587, First Ring Gear 551, Planet Gear Carrier 550 (planet gear 579 rotates around first sun gear 160 and planet gear 608 rotates around fourth sun gear 172), Second Ring Gear 553, Roller Clutch 628, Hub Shell 12 |
| 3 | Driver 11, Pawl 587, First Ring Gear 551, Planet Gear Carrier 550 (planet gear 579 rotates around first sun gear 160 and planet gear 608 rotates around fourth sun gear 168), Second Ring Gear 553, Roller Clutch 628, Hub Shell 12 |
| 4 | Driver 11, Pawl 587, First Ring Gear 551, Planet Gear Carrier 550 (planet gear 579 rotates around first sun gear 160 and planet gear 608 rotates around fourth sun gear 164), Second Ring Gear 553, Roller Clutch 628, Hub Shell 12 |
| 5 | Driver 11, Clutch Ring 28, Planet Gear Carrier 550, Pawl 908, Hub Shell 12 |
| 6 | Driver 11, Clutch Ring 28, Planet Gear Carrier 550 (planet gear 608 rotates around fourth sun gear 172), Second Ring Gear 553, Roller Clutch 628, Hub Shell 12 |
| 7 | Driver 11, Clutch Ring 28, Planet Gear Carrier 550 (planet gear 608 rotates around third sun gear 168), Second Ring Gear 553, Roller Clutch 628, Hub Shell 12 |
| 8 | Driver 11, Clutch Ring 28, Planet Gear Carrier 550 (planet gear 608 rotates around second sun gear 164), Second Ring Gear 553, Roller Clutch 628, Hub Shell 12 |

Following Table 2 shows the coupling of the various components for each speed stage.

**Table 2**

| Speed Stage | Pawl 18 and Ratchet ring 19 | Clutch ring 28 and Planet carrier 550 | Second Sun gear 164 | Third Sun gear 168 | Fourth Sun gear 172 |
|---|---|---|---|---|---|
| 1 | Disengaged | Disengaged | Free | Free | Free |
| 2 | Disengaged | Disengaged | Free | Free | Locked |
| 3 | Disengaged | Disengaged | Free | Locked | Free |
| 4 | Disengaged | Disengaged | Locked | Free | Free |
| (Same as 5) | Engaged | Disengaged | Locked | Free | Free |
| (Same as 5) | Engaged | Disengaged | Free | Free | Free |
| 5 | Engaged | Engaged | Free | Free | Free |
| 6 | Engaged | Engaged | Free | Free | Locked |
| 7 | Engaged | Engaged | Free | Locked | Free |
| 8 | Engaged | Engaged | Locked | Free | Free |

In speed stages 5 to 8, hub shell 12 rotates relative to ratchet ring 19 due to friction rotating body 20 and friction spring 23 even though pawl 18 and ratchet ring 19 are engaged as will be explained in greater detail.

In the following the structure of the power transmission auxiliary mechanism 15 is described in more detail.

Power transmission auxiliary mechanism 15 comprises a power transmission unit 16 and a clutch unit 17. Power transmission unit 16 couples driver 11 to hub shell 12. Clutch unit 17 is provided for actuating power transmission unit 16.

Power transmission unit 16 comprises at least one pawl 18, specifically four pawls 18 that are disposed circumferentially around hub axle 10. The arrangement and structure of pawls 18 can be seen in Fig. 2b. Each pawl 18 has two arms that form a tip 18a and a tail 18b. The arms with tip 18a and tail 18b are inclined with respect to each other to facilitate the engagement of pawl 18 with adj acent components.

Tail 18b comprises a protrusion formed on the side of the pawl 18 proximate to driver 11. Tip 18a is formed as a tooth that extends radially outwardly. Pawl 18 is connected with a pawl spring 18d that biases pawl 18 in a counter-clockwise direction such that tip 18a is forced radially outwardly. The biasing direction of pawl spring 18d is indicated in Fig. 2b by corresponding arrows. Pawl spring 18d also produces an axial bias force that acts as axial return force on pawl 18.

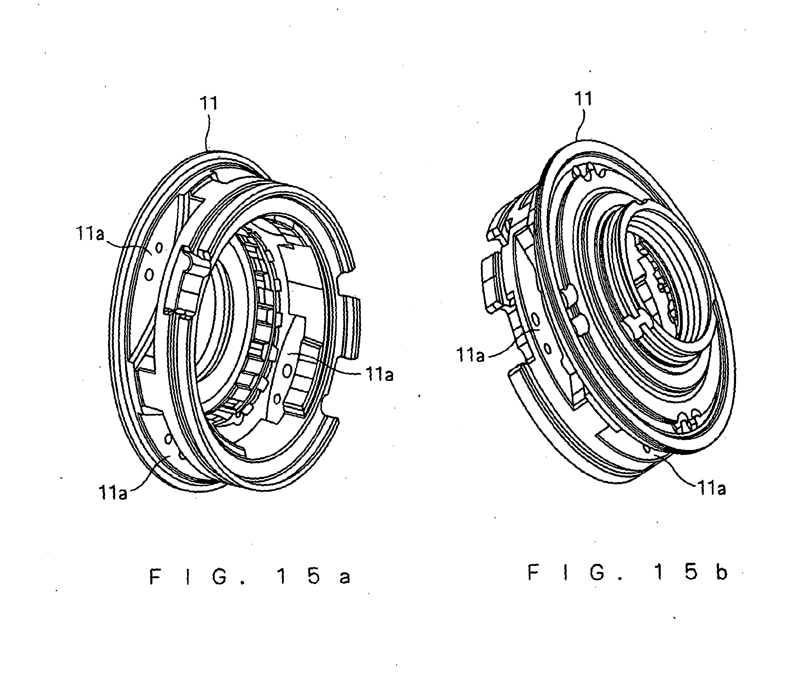

To accommodate pawl 18 in driver 11, pawl receiving openings 11a or grooves are provided in driver 11 as shown in Fig. 15a, 15b. The axial length of the power receiving opening 11 a is adapted to allow the axial movement of pawl 18 along pin 18c.

Power transmission unit 16 further comprises a pawl engaging device that can be, for example, a ratchet ring 19 coupled to hub shell 12 (Fig. 1 and Fig. 2b). Pawl 18 and ratchet ring 19 are engageably disposed to transmit - in the engaged state - rotational power from driver 11 to cup 120 and, thus, to hub shell 12. Ratchet ring 19 comprises a friction rotating body 20 that includes a plurality of ratchet teeth 21 on an inner peripheral surface 22 of friction rotating body 20 as illustrated in Figures 1 and 2b. Friction rotating body 20 is connected to a friction spring 23 that is disposed between the friction rotating body 20 and hub shell 12. Friction spring 23 is arranged in a spring receiving groove formed on an outer peripheral surface of friction rotating body 20.

Clutch unit 17 comprises a control ring 24 which is coupled to shift mechanism 14. Control ring 24 is rotatably disposed relative to hub axle 10 for coupling with power transmission auxiliary mechanism 15. Control ring 24 comprises a plurality of protrusions 24a and 24b and recesses 24c that are disposed in an alternating manner on an outer circumferential surface of control ring 24.

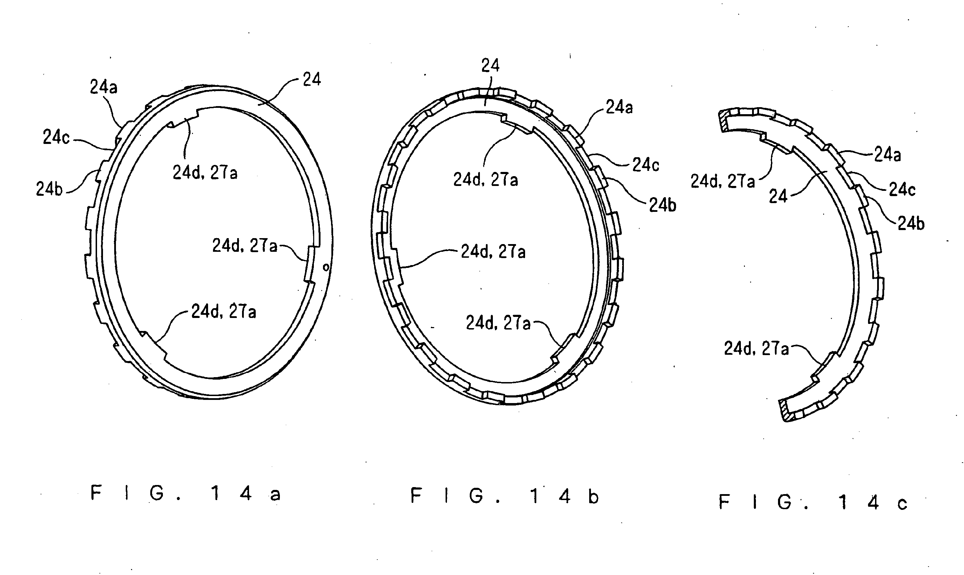

Protrusions 24a and 24b extend axially in direction of driver 11 and are inclined by an angle of 90° with respect to a vertical plane defined by control ring 24. Axial protrusions 24a and 24b are arranged on the side of control ring 24 proximate to driver 11. As illustrated in Fig. 14c, control ring 24 has an L-shaped cross-sectional form in the area of axial protrusions 24a, 24b.

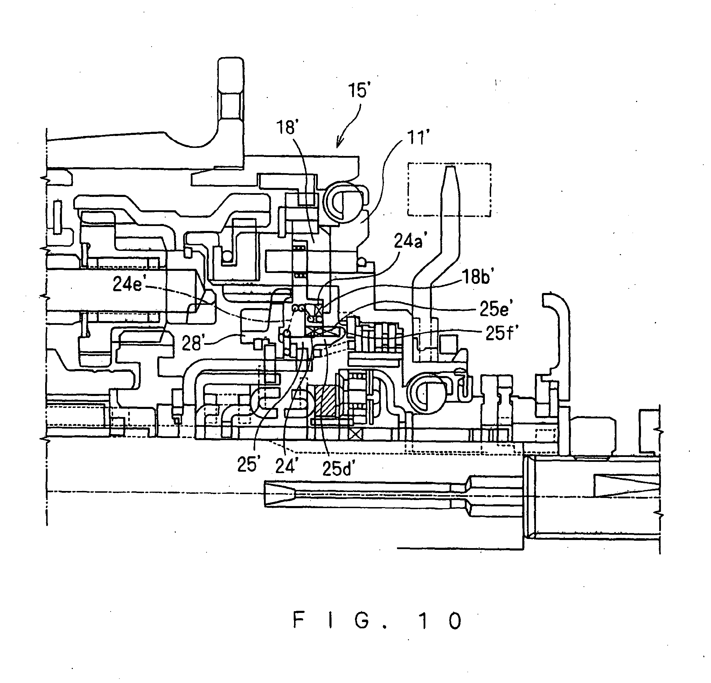

On an inner peripheral surface of control ring 24, at least one, specifically three radially inwardly extending protrusions 24d are provided. Radial protrusions 24d function as a rotation limiting means 27a that stop a rotational movement of control ring 24a. The structure of control ring 24 is best seen in Figures 10a, 10b, and 10c.

Control ring 24 is rotatably supported by a differential rotation body 25 that is disposed to axially move relative to hub axle 10 and driver 11. In this embodiment, control ring 24 is axially fixed to differential rotation body 25 which means that the control ring 24 can only carry out a rotational movement relative to differential rotation body 24 but not an axial movement. Since the differential rotation body 24 is axially movable relative to hub axle 10 and driver 11, also control ring 24 - together with differential rotation body 25 - can be axially moved relative to hub axle 10 and to driver 11. Therefore, control ring 24 is allowed to carry out both a rotational and an axial movement relative to hub axle 10 and driver 11.

Specifically, differential rotation body 25 is disposed to axially move on feed cam 26. Differential rotation body 25 is non-rotatably connected to clutch cam portion 176 of feed cam 26 by means of a wave washer 25a and a tension plate 14 that are arranged on an inner peripheral surface of differential rotation body 25.

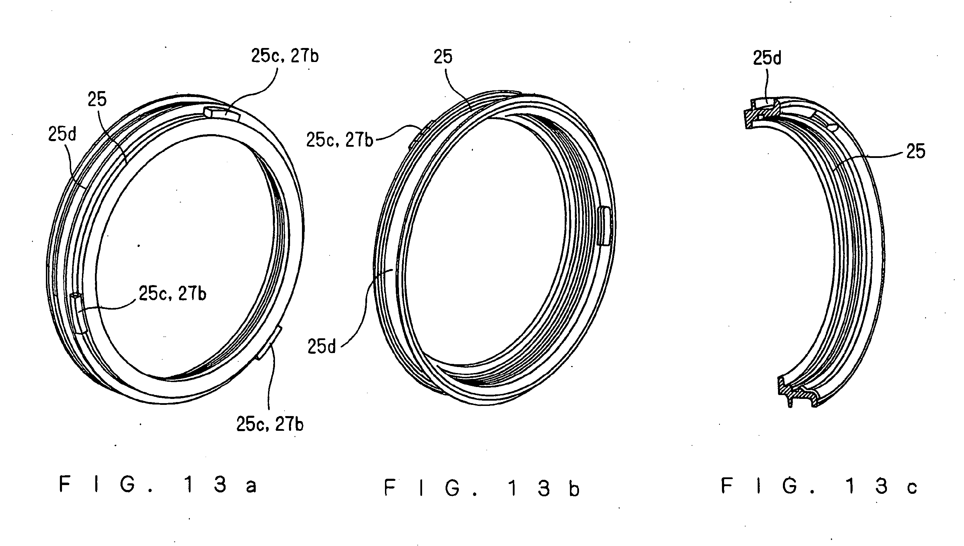

Differential rotation body 25 further comprises radial protrusions 25c that are formed on an outer peripheral surface of differential rotation body 25 as best seen in Fig. 13a and 13b. Radial protrusions 25c function as rotation limiting means 27b that cooperate with radial protrusions 24d of control ring 24. That is, control ring 24 can be rotated on differential rotation body 25 wherein the rotational movement of control ring 24 is stopped if radial protrusion 24d of control ring 24 and radial protrusion 25c of differential rotation body 25 abut against each other.

As further seen in Fig. 13a to 13c and Fig. 1, differential rotation body 25 comprises an axially extending groove 25d for receiving one end of a control ring spring 24e. Control ring spring 24e biases control ring 24 in a circumferential direction relative to differential rotation body 25 in order to return control ring 24 to an initial position after control ring 24 has been rotated on differential rotation body 25. Control ring 24 is also biased in an axial direction by means of return spring 24f that is inserted between driver 11 and control ring 24.

Clutch unit 17 further comprises clutch ring 28 that can be engaged with and disengaged from planet gear carrier 550 of power transmission mechanism 13 in a known manner as described in EP 1 323 627 A2. Clutch ring 28 is coupled with differential rotation body 25 such that both clutch ring 17 and differential rotation body 25 are axially movable on clutch cam portion 176.

The function and operation of power transmission auxiliary mechanism 15 is described as follows.

Fig. 2a shows an initial position of power transmission auxiliary mechanism 15, in particular of pawls 18, if power transmission 13 is in speed stages 5 to 8 and clutch ring 28 is engaged with planet gear carrier 550. In this situation, pawls 18 are axially moved to the normal position, that is to an end position distant from driver 11 (leftmost side position). Pawls 18 are moved to normal positions by means of pawl spring 18d respectively.

Moreover, pawl spring 18d biases the respective associated pawl 18 in a counter-clockwise direction. This has the effect that tip 18a of pawl 18 and ratchet teeth 21 of ratchet ring 19 engage. As should be evident from Fig. 2a, protrusions 24a and 24b of control ring 24 do not contact tail 18a of pawl 18.

In speed stages 6 to 8, hub shell 12 rotates faster than ratchet ring 19 and, also, friction rotation body 20 and friction spring 23. In other words, hub shell 12 overtakes friction rotation body 20 and friction spring 23. Since friction rotation body 20 and friction spring 23 act as a one-way slip clutch, no rotational force is transmitted from driver 11 to hub shell 12 by means of power transmission auxiliary mechanism 15. Therefore, the rotational force is only transmitted by power transmission mechanism 13.

In speed stage 5, hub shell 12, driver 11 and ratchet ring 19 rotate at the same speed. As explained, friction rotation body 20 and friction spring 23 avoid that a rotational force is transmitted to hub shell 12 at the same time both by means of power transmission mechanism 13 and power transmission auxiliary mechanism 15.

The invention is not restricted to a slip clutch, but may generally include other one-way clutches. For example, it would also be possible to employ a one-way roller clutch or pawl clutch replacing friction rotation body 20 and friction spring 23. However, the present embodiment is advantageous since it leads to a more compact and light weight construction than would be possible if a pawl clutch is used. Moreover, a roller clutch would not be able to couple as quickly as power transmission unit 16 of the present embodiment using the friction rotation body 20 and the friction spring 23 as a slip clutch.

When the bicycle decelerates and the cyclist wishes to shift from speed stage 5 to speed stage 4 (down shift), clutch ring 28 is disengaged from planet gear carrier 550 as shown in Fig. 3a. The actuation of clutch ring 28 by means of shift key member 700 is described in detail in EP 1 323 627 A2. As shown in Fig. 3a, clutch ring 28 is moved together with control ring 24 and differential rotation body 25 towards driver 11, that is to the right side in Fig. 3a. Thereby, protrusions 24a of control ring 24 contact tail 18b of pawl 18. Control ring 24 is further moved towards driver 11 and also pushes pawl 18 towards driver 11. In this situation, pawls 18 are maintained in engagement with ratchet ring 19 by means of pawl spring 18d.

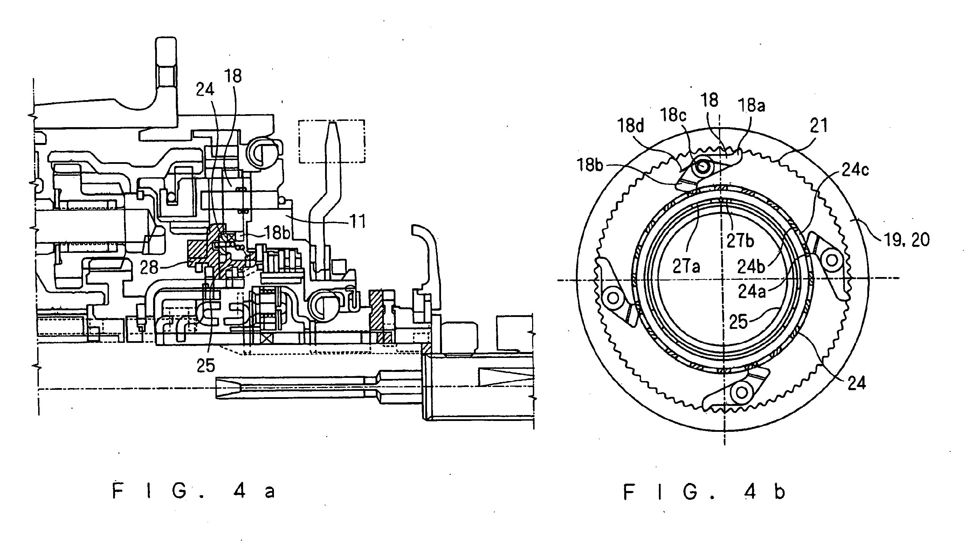

Fig. 4a shows a state of the power transmission auxiliary mechanism 15 wherein pawls 18 are moved to an end position close or proximate to driver 11. In this situation, clutch unit 17, comprising clutch ring 28, control ring 24 and control ring spring 24e arrive at a position corresponding to speed stage 4. As should be evident from Fig. 4b, pawls 18 still engage with ratchet ring 19.

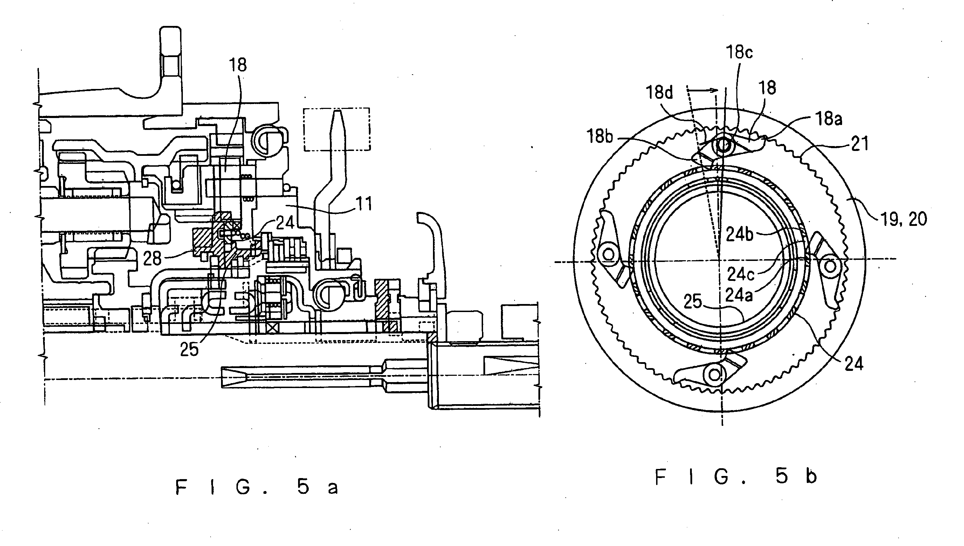

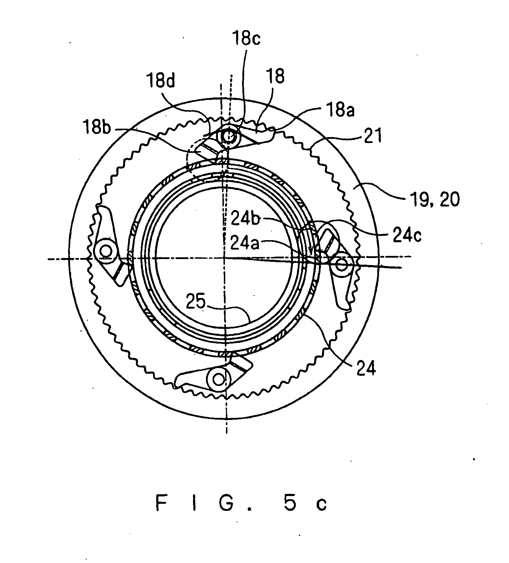

Figures 5a, 5b show an intermediate position of pawls 18. As indicated by an arrow in Fig. 5b, pawl 18 rotates with driver 11 relative to control ring 24. Thus, tail 18b of pawl 18 moves between protrusions 24a, 24b into recess 24c. As pawl 18 engages recess 24c of control ring 24, pawl 18 is pushed back away from driver 11 by the spring force exerted by pawl spring 18d. Hence, tail 18b is received in recess 24c between protrusions 24a, 24b of control ring 24. As further shown in Fig. 5c, control ring 24 rotates together with driver 11 relative to differential rotation plate 25 and against the biasing force of control ring spring 24e, since tail 18b of pawl 18 is engaged with recess 24c between protrusions 24a, b of control ring 24.

The rotational movement of control ring 24 is limited by a cooperation of the rotation limiting means 27a, 27b, that is by radial protrusion 24d of control ring 24 and radial protrusion 25c of differential rotation body 25, respectively. In the embodiment according to Fig. 5c, the rotation angle is 90°. The rotation angle can be set to other values, e.g. 120°. During rotation, pawl 18 remains in the intermediate position and transmission auxiliary path is maintained as auxiliary speed stage 5. During the rotation of control ring 24 with driver 11, second sun gear 164 is locked for speed stage 4. At the same time, transmission auxiliary path is maintained corresponding to speed stage 5.

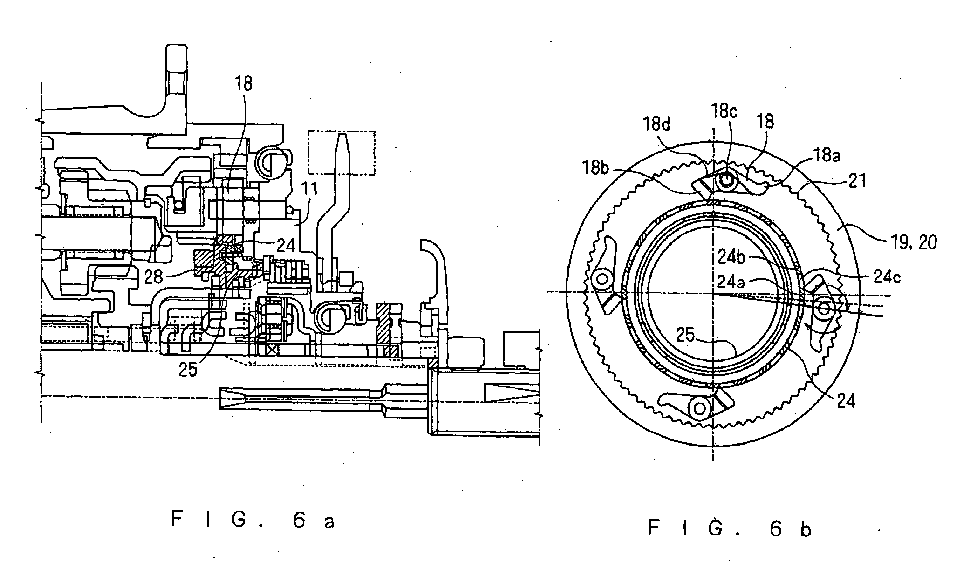

Fig. 6a, 6b show power transmission auxiliary mechanism 15 in a state where pawls 18 are in the intermediate position and disengaged from ratchet ring 19. As best seen in Fig. 6b and described in conjunction with Fig. 5c, control ring 24 stops to rotate together with driver 11 with the effect that a relative movement between driver 11 and control ring 24 occurs. Due to the relative movement between driver 11 and control ring 24, protrusion 24a pushes against tail 18b of pawl 18 which rotates around pin 18c against the circumferential biasing force of pawl spring 18d. In other words, tail 18b is overloaded by means of protrusion 24a of control ring 24. Due to the rotation of pawl 18, tip 18a disengages from ratchet ring 19 as shown in Fig. 6b.

The shifting from speed stage 5 to speed stage 4 is now complete.

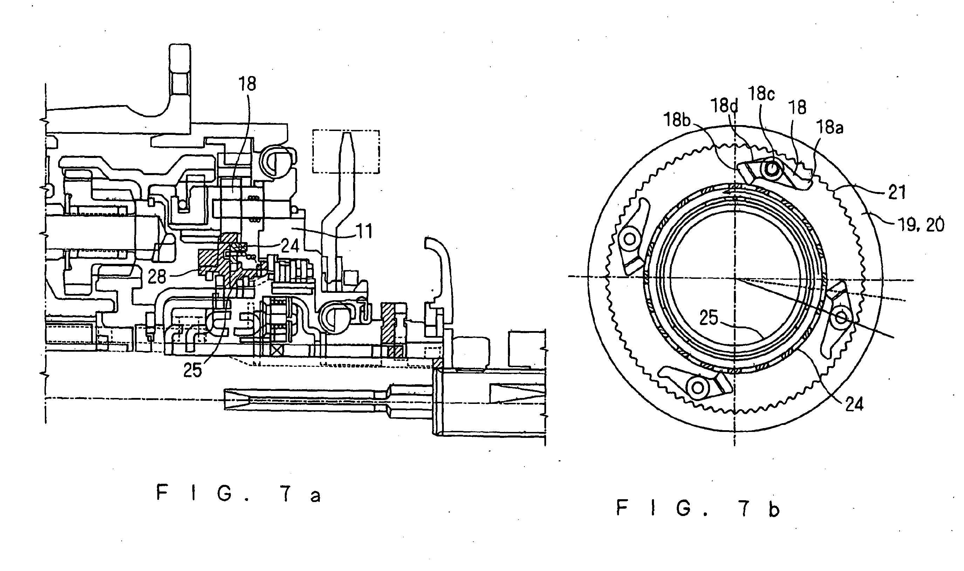

As shown in Fig. 7a and 7b, pawls 18 are pushed back to the normal position (away from driver 11) by means of pawl spring 18d since pawls 18 are disengaged from recess 24c of control ring 24. Due to the circumferential biasing force of control ring spring 24e, control ring 24 is returned to the normal position. The return rotation of control ring 24 is limited by radial protrusions 24d, 25c formed on control ring 24 and differential rotation body 25 respectively. The return rotation of control ring 24 is indicated in Fig. 7b by an arrow. In this position of pawls 18, tail 18b of respective pawl 18 contacts an outward annular surface of control ring 24 and pawl 18 is maintained in the disengaged state.

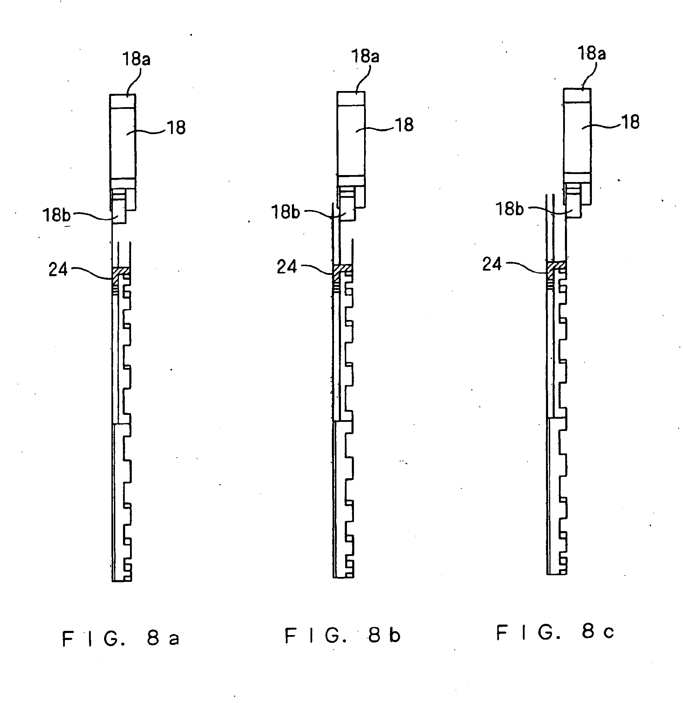

Figures 8a to 8c illustrate the different positions of pawl 18 relative to control ring 24 in hub axle direction. Fig. 8a shows the initial position of pawl 18 wherein pawl 18 is in an end position distant from driver 11 (leftmost side position). Tail 18b of pawl 18 contacts the outward annular surface of control ring 24. Fig. 8b shows the intermediate position of pawls 18 wherein tail 18b of pawl 18 engages recess 24c of control ring 24.
Fig. 8c shows the end position of pawl 18 proximate to driver 11 wherein tail 18b of pawl 18 contacts protrusion 24a of control ring 24.

In summary, when the bicycle slows down and the cyclist wishes to shift from speed stage 5 to speed stage 4 (downspeed), after protrusions 24a of control ring 24 have contacted tail 18b of pawl 18, control ring 24 is further moved towards driver 11 and also pushes pawl 18 towards driver 11. And then, after the down shifting from speed stage 5 to speed stage 4 is complete, pawls 18 are pushed back to the normal position (away from driver 11) by means of pawl spring 18d.

In other words, in the present embodiment, power transmission auxiliary mechanism 15 establishes a power transmission unit that comprises at least one movable pawl relative to control ring in hub axle direction.

The invention is not limited to this axially movable pawl, but also envisages other mechanisms that allow returning back of the movable control ring relative to the pawl in hub axle direction.

When the bicycle speeds up and the cyclist wishes to shift from speed stage 4 to speed stage 5 (up shift), clutch ring 28 is moved away from driver 10 by means of return spring 24f. When clutch ring 28 moves to the left side (position of speed stage 5), clutch ring 28 detaches from tail 18b of pawl 18. Pawl 18 rotates by means of pawl spring 18d to engage with ratchet ring 19 of friction rotating body 20.

Then, a tentative shifting to speed stage 5 is carried out. The power transmission auxiliary path corresponding to speed stage 5 comprises driver 11, pawl 18, friction rotating body 20, friction spring 21, hub shell 12. While transmission auxiliary path corresponding to speed stage 5 is maintained, second sun gear 164 is released. Clutch ring 28 engages with planet gear carrier 550.

The shifting from speed stage 4 to speed stage 5 is now complete.

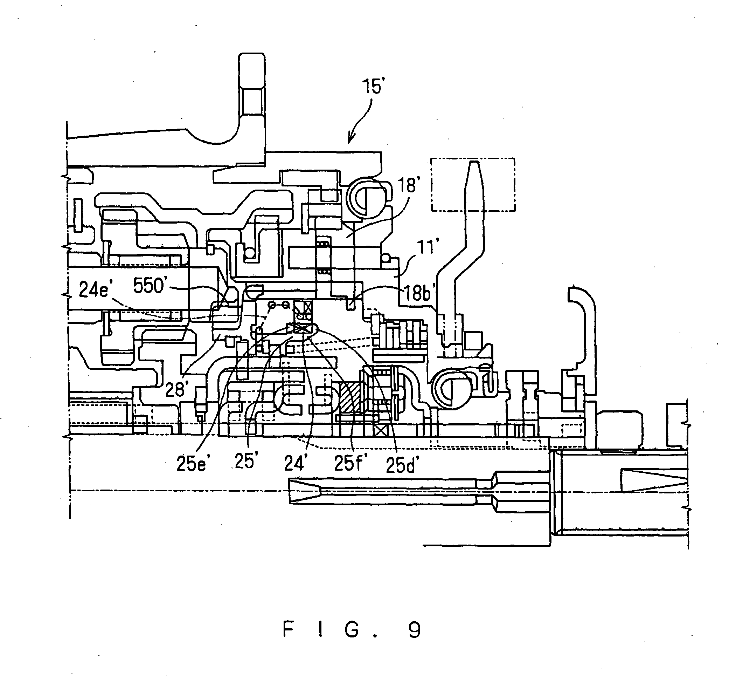

Figures 9 to 11 illustrate another embodiment of the invention that distinguishes from the aforementioned embodiment by the arrangement for the relative movement between control ring 24' and pawl 18'. In the following, only the components different between the two embodiments are explained.

The embodiment according to Figures 9 to 11 is based on the idea to allow an axial movement of control ring 24' relative to the differential rotation body 25' for engaging/disengaging pawl 18'. Since the relative axial movement between control ring 24' and pawl 18' is effected by axially moving control ring 24' on differential rotation body 25', the pawl 18' may be axially fixed to driver 11'. In contrast, the engagement/disengagement function of the embodiment according to Fig. 1 is effected by allowing pawl 18 to axially move relative to driver 11 while control ring 24 is axially fixed to differential rotation body 25.

In particular, differential rotation body 25' comprises an axially extending protrusion 25d'. Axial protrusion 25d' of differential rotation body 25 comprises axial guide means 25e' that support control ring 24' and allow an axial movement of control ring 24' relative to differential rotation body 25'. The inner peripheral surface of control ring 24' is adapted to cooperate with axial guide means 25e' such that both a rotational and an axial movement of control ring 24' relative to differential rotation body 25' is allowed.

As can be seen in Fig. 9, axial protrusion 25d' with axial guide means 25e' of differential rotation body 25' are spaced apart from clutch ring 28'. In the space between clutch ring 28' and axial protrusion 25d', the control ring spring 24e' is disposed which biases control ring 24' both in an axial and a circumferential direction with respect to the differential rotation body 25'. Thus, control ring spring 24e' is disposed between clutch ring 28' and control ring 24'. Therefore, the axial biasing force exerted by control ring 24e' on control ring 24' acts in a direction towards the driver 11'.

In contrast, control ring spring 24e of the embodiment according to Fig. 1 is disposed on the other side of control ring 24, that is between axial protrusion 25d and control ring 24. In the embodiment according to Fig. 1, axial protrusion 25d functions as a fixation for control ring spring 24e, whilst axial protrusion 25d' of the embodiment according to Fig. 9 comprises axial guide means 25e' that support control ring 24'.

It follows from the above explanations that in the embodiment according to Fig. 9, the axial return force is generated by means of the control ring spring 24e', whilst in the embodiment according to Fig. 1, the axial return force is generated by the pawl spring 18d. Thereby, it is possible that in the embodiments according to Fig. 1 and Fig. 9, respectively, the axially movable component, namely pawl 18 (Fig. 1) and control ring 24' (Fig. 9) can be brought back into the initial position when the relative movement between the two components and the engagement/disengagement operation has been accomplished.

In the following, the function of the power transmission auxiliary mechanism 15' of the embodiment according to Fig. 9 will be explained.

Fig. 9 shows an initial position of power transmission auxiliary mechanism 15' similar to the position according to Fig. 2a. In this initial position, the power transmission mechanism 13 is in speed stages 5 to 8, and the clutch ring 28' is engaged with planet gear carrier 550'. As mentioned before, pawls 18' are axially fixed to driver 11. This means, that only a rotational movement of pawl 18 relative to driver 11 is allowed.

Control ring 24' is in the normal position. That is, control ring spring 24e pushes control ring 24e to the end position where control ring 24' is most distant from clutch ring 28'. The axial movement of control ring 24' away from clutch ring 28' is limited by a stopper 25f' which radially extends from axial protrusion 25d' on the side of differential rotation body 25' that faces driver 11'.

As explained in connection with the embodiment according to Fig. 1, the rotational force is transmitted to the hub shell 12 by means of power transmission mechanism 13. The one-way clutch, in particular friction rotating body 20 and friction spring 23 are in an idle state.

As should be evident from Fig. 10, clutch ring 28' and planet gear carrier 550' are decoupled and clutch ring 28' together with differential rotation body 25' and control ring 24' is moved towards driver 11'. In the position according to Fig. 10, clutch ring 24' and differential rotation body 25' arrive at a position corresponding to speed stage 4, close or proximate to driver 11. In this position, the power transmission auxiliary path is established by means of power transmission auxiliary mechanism 15' since friction rotating body 20 and friction spring 23 couple the hub shell 12 to the pawl 18'. Thus, rotational force is transmitted from driver 11' to hub shell 12 by means of power transmission auxiliary mechanism 15' with a gear ratio of 1.0. Therefore, the same gear ratio as in speed stage 5 is maintained.

It is further seen in Fig. 10 that axial protrusion 24a' of control ring 24' contacts tail 18b' of pawl 18'. Since control ring 24' is moved towards driver 11' by means of clutch ring 28', respectively shift key member 700, control ring 24' is pushed back towards clutch ring 28' relative to differential rotation body 25 against the biasing force of control ring spring 24e'.

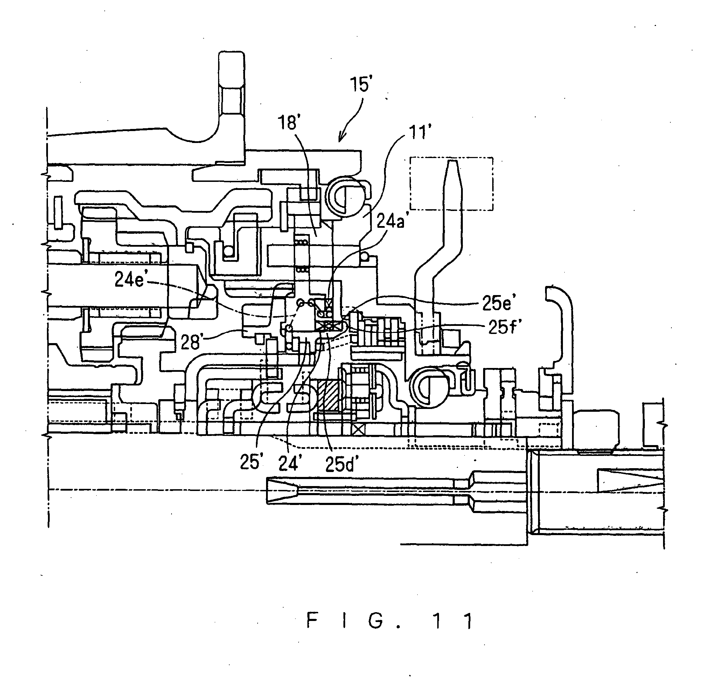

Fig. 11 shows an intermediate position of control ring 24' wherein protrusions 24a', 24b' of control ring 24' and recess 24c' between protrusions 24a', 24b' engage the tail 18b' of pawl 18'. Due to the engagement of control ring 24' with tail 18b' of pawl 18', control ring 24' moves toward driver 11' (to the right side in Fig. 11) relative to differential rotation body 25 forced by control ring spring 24e'. The disengagement of control ring 24' and pawl 18' is effected once the intermediate position is terminated as explained in detail in connection with Figures 5a and 6a of the embodiment according to Fig. 1. Therefore, also in this embodiment, the rotation limiting means (not shown) limit the rotational movement of control ring 24' relative to differential rotation body 25' with the effect that protrusions 24a' push against tail 18b' of pawl 18' thereby disengaging pawl 18' from ratchet ring 19.

Prior to the disengagement of pawl 18', the power transmission mechanism 13 has been shifted, in particular second sun gear 164 has been locked and the power transmission path is established by (main) power transmission mechanism 13.

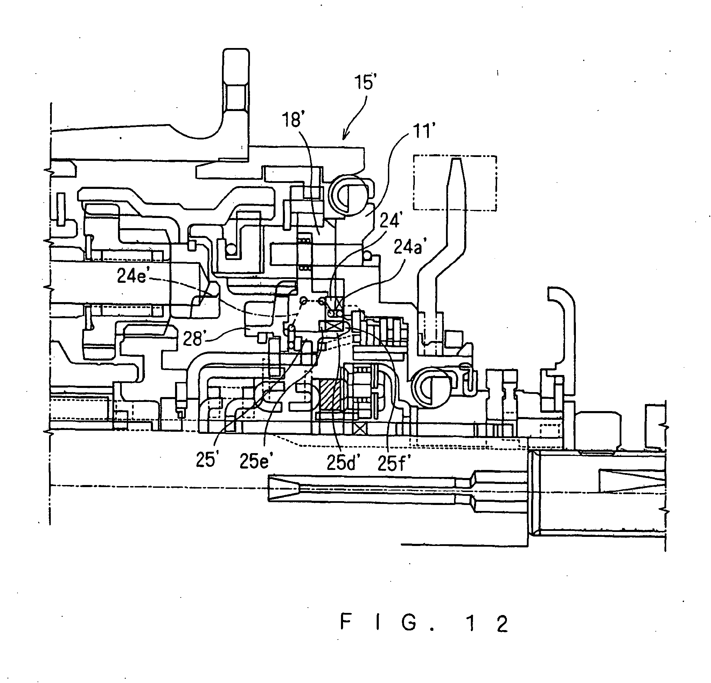

Fig. 12 shows the state in which protrusions 24a', 24b' and recess 24c' of control ring 24' are disengaged from tail 18b' of pawl 18'. Due to the axial biasing force of control ring spring 24e', control ring 24' is moved towards driver 11' relative to differential rotation body 25'. Control ring 24' is moved to the normal initial position where control ring 24' is pushed against stopper 25f' by control ring spring 24e'. Pawl 18' is maintained in the disengaged position as tail 18b' of pawl 18' contacts the outer peripheral surface of control ring 24'.

Power transmission mechanism 13 can now be shifted between speed stages 1 to 4.

The up-shift operation of transmission hub according to Figures 9 to 12 is carried out vice versa and functions in an analogous manner as the up-shift operation of the embodiment according to Fig. 1.

In the aforementioned embodiments, power transmission auxiliary mechanism 15, 15' establishes a power transmission auxiliary path corresponding to speed stage 5 (gear ratio: 1,0). The invention is not limited to this specific gear ratio of power transmission auxiliary mechanism 15, but also envisages other mechanisms that allow to create other gear ratios for power transmission auxiliary path.

Moreover, the principle to establish a power transmission auxiliary path for shifting the main power transmission mechanism in an unloaded state can be applied to hub transmissions having other power transmission mechanisms than described herein. For example, the power transmission auxiliary mechanism can be applied to a planetary gear mechanism that produces, for example, only 6 speed stages.

The invention presents the advantage to enable a shock-less, or at least considerably shock-reduced, shifting of the hub transmission by means of a relatively simple and compact structure thereby significantly improving the comfort of a cyclist when actuating the hub transmission.

### List of Reference Signs

- 10: hub axle
- 11: driver
- 11a: openings
- 12: hub shell
- 13: power transmission mechanism
- 14: shift mechanism
- 15, 15': power transmission auxiliary mechanism
- 16: power transmission unit
- 17: clutch unit
- 18, 18': pawl
- 18a: tip
- 18b, 18b': tail
- 18c: pin
- 18d: pawl spring
- 19: ratchet ring
- 20: friction rotating body
- 21: ratchet teeth
- 22: inner peripheral surface
- 23: friction spring
- 24, 24': control ring
- 24a, 24b, 24a': protrusions
- 24c: recess
- 24d: radial protrusions
- 24e, 24e': control ring spring
- 24f: return spring
- 25, 25': differential rotation body
- 25a: wave washer
- 25b: tension plate
- 25c: radial protrusion
- 25d, 25d': axial protrusion
- 25 e': axial guide means
- 25f: stopper
- 26: feed cam
- 27a, 27b: rotation limiting means
- 28, 28': clutch ring
- 54: sprocket
- 120: cup
- 128: ball bearing
- 160: first sun gear
- 164: second sun gear
- 168: third sun gear
- 172: fourth sun gear
- 176: clutch cam portion
- 550, 550': planet gear carrier
- 551: first ring gear
- 552: second ring gear
- 574: master pinion pin
- 579: first planet gear
- 587: pawls
- 608: second planet gear
- 628: roller clutch
- 700: shift key member
- 740: cam followers
- 908: coupling mechanism

## Claims

1. A hub transmission for a bicycle comprising:
- a hub axle (10);
- a driver (11) rotatably supported by the hub axle (10);
- a hub shell (12) rotatably supported by the hub axle (10);
- a power transmission mechanism (13) disposed between the driver (11) and the hub shell (12) for communicating rotational power from the driver (11) to the hub shell (12) through a plurality of power transmission paths; and
- a shift mechanism (14) for selecting one of the plurality of power transmission paths;
**characterized by**
a power transmission auxiliary mechanism (15) disposed between the driver (11) and the hub shell (12) for communicating rotational power from the driver (11) to the hub shell (12) wherein the power transmission auxiliary mechanism (15) is adapted to function as a bypass that continues transmitting rotational power from the driver (11) to the hub shell (12) when shifting between two speed stages with the effect that the power transmission mechanism (13) can be shifted in an unloaded state.

2. The hub transmission according to claim 1,
**characterized in that** the power transmission auxiliary mechanism (15) is adapted to communicate rotational power from the driver (11) to the hub shell (12) when the power transmission mechanism (13) is actuated to change the power transmission path.

3. The hub transmission according to claim 1 or 2,
wherein the power transmission auxiliary mechanism (15) comprises a power transmission unit (16) for coupling the driver (11) to the hub shell (12) and a clutch unit (17) for actuating the power transmission unit (16).

4. The hub transmission according to any of claims 1 to 3,
wherein the power transmission auxiliary mechanism (15) comprises at least one pawl (18) coupled to the driver (11) and a pawl engaging device, in particular a ratchet ring (19) coupled to the hub shell (12),
wherein the pawl (18) and the pawl engaging device, in particular the ratchet ring (19) are engageable to transmit rotational power.

5. The hub transmission according to claim 4,
wherein the pawl (18) is rotatably movably supported by the driver (11).

6. The hub transmission according to claim 4 or 5,
wherein the pawl (18) is axially movably supported by the driver (11).

7. The hub transmission according to claim 4 or 5,
wherein the pawl (18) is axially fixed to the driver (11).

8. The hub transmission according to any of claims 4 to 7,
wherein the ratchet ring (19) comprises a friction rotating body (20) including a plurality of ratchet teeth (21) on an inner peripheral surface (22) of the friction rotating body (20).

9. The hub transmission according to claim 8,
wherein the friction rotating body (20) is connected to a friction spring (23) disposed between the friction rotating body (20) and the hub shell (12).

10. The hub transmission according to any of claims 3 to 9,
wherein the clutch unit (17) comprises a control ring (24) which is coupled to the shift mechanism (14) and movably disposed for coupling with and decoupling from the power transmission auxiliary mechanism (15).

11. The hub transmission according to claim 10,
wherein the control ring (24) is rotatably and axially movably disposed relative to the hub axle (10).

12. The hub transmission according to claim 11,
wherein the control ring (24) is supported by a differential rotation body (25) and the control ring (24) is rotatably movable relative to the differential rotation body (25).

13. The hub transmission according to claim 12,
wherein the differential rotation body (25) is axially movable relative to the hub axle (10).

14. The hub transmission according to claim 12 or 13,
wherein the control ring (24) is axially fixed to the differential rotation body (25).

15. The hub transmission according to claim 12 or 13,
wherein the control ring (24) is axially movable relative to the differential rotation body (25).

16. The hub transmission according to any of claims 12 to 15,
wherein the control ring (24) and the differential rotation body (25) comprise rotation limiting means (27a, 27b) that stop a rotational movement of the control ring (24).

17. The hub transmission according to any of claims 10 to 16,
wherein the control ring (24) is biased in a circumferential and an axial direction.

18. The hub transmission according to any of claims 12 to 17,
wherein the clutch unit (17) comprises a clutch ring (28) engagable with a planet gear carrier (550) of the power transmission mechanism (13),
wherein the clutch ring (17) and the differential rotation body (25) are coupled and axially movable.

19. A method for shifting a hub transmission of a bicycle wherein one of a plurality of power transmission paths of a power transmission mechanism (13) is selected **characterized in that** a power transmission auxiliary path is established during shifting by means of a power transmission auxiliary mechanism (15) which functions as a bypass that continues transmitting rotational power from a driver (11) to a hub shell (12) when shifting between two speed stages such that the power transmission path is selected in a substantially unloaded state of the power transmission mechanism (13).

## Patentansprüche

1. Nabenschaltung für ein Fahrrad, wobei die Nabenschaltung folgendes aufweist:
- eine Nabenachse (10);
- ein Antriebselement (11), das von der Nabenachse (10) drehbar gelagert ist;
- ein Nabengehäuse (12), das von der Nabenachse (10) drehbar gelagert ist;
- einen Kraftübertragungsmechanismus (13), der zwischen dem Antriebselement (11) und dem Nabengehäuse (12) angeordnet ist, um Rotationskraft von dem Antriebselement (11) über eine Vielzahl von Kraftübertragungswegen zu dem Nabengehäuse (12) zu übertragen; und
- einen Schaltmechanismus (14) zum Auswählen von einem aus der Vielzahl von Kraftübertragungswegen;
**gekennzeichnet durch**
einen Kraftübertragungs-Hilfsmechanismus (15), der zwischen dem Antriebselement (11) und dem Nabengehäuse (12) angeordnet ist, um eine Rotationskraft von dem Antriebselement (11) zu dem Nabengehäuse (12) zu übertragen, wobei der Kraftübertragungs-Hilfsmechanismus (15) dazu ausgebildet ist, eine Funktion als Überbrückungseinrichtung auszuführen, die die Übertragung von Rotationskraft von dem Antriebselement (11) zu dem Nabengehäuse (12) bei einem Schaltvorgang zwischen zwei Geschwindigkeitsstufen fortsetzt, mit dem Effekt, daß der Kraftübertragungsmechanismus (13) in einem unbelasteten Zustand geschaltet werden kann.

2. Nabenschaltung nach Anspruch 1,
**dadurch gekennzeichnet,**
**daß** der Kraftübertragungs-Hilfsmechanismus (15) dazu ausgebildet ist, eine Rotationskraft von dem Antriebselement (11) zu dem Nabengehäuse (12) zu übertragen, wenn der Kraftübertragungsmechanismus (13) zum Ändern des Kraftübertragungsweges betätigt wird.

3. Nabenschaltung nach Anspruch 1 oder 2,
wobei der Kraftübertragungs-Hilfsmechanismus (15) eine Kraftübertragungseinheit (16) zum Koppeln des Antriebselements (11) mit dem Nabengehäuse (12) und eine Kupplungseinheit (17) zum Betätigen der Kraftübertragungseinheit (16) aufweist.

4. Nabenschaltung nach einem der Ansprüche 1 bis 3,
wobei der Kraftübertragungs-Hilfsmechanismus (15) mindestens eine mit dem Antriebselement (11) gekoppelte Klinke (18) und eine Klinken-Eingriffsvorrichtung, insbesondere einen mit dem Nabengehäuse (12) gekoppelten Ratschenring (19) aufweist,
wobei die Klinke (18) und die Klinken-Eingriffsvorrichtung, insbesondere der Ratschenring (19), zum Übertragen von Rotationskraft miteinander in Eingriff bringbar sind.

5. Nabenschaltung nach Anspruch 4,
wobei die Klinke (18) von dem Antriebselement (11) drehbar gelagert ist.

6. Nabenschaltung nach Anspruch 4 oder 5,
wobei die Klinke (18) von dem Antriebselement (11) axial beweglich gelagert ist.

7. Nabenschaltung nach Anspruch 4 oder 5,
wobei die Klinke (18) an dem Antriebselement (11) axial fixiert ist.

8. Nabenschaltung nach einem der Ansprüche 4 bis 7,
wobei der Ratschenring (19) einen Reibungsdrehkörper (20) aufweist, der eine Vielzahl von Ratschenzähnen (21) an einer Innenumfangsfläche (22) des Reibungsdrehkörpers (20) aufweist.

9. Nabenschaltung nach Anspruch 8,
wobei der Reibungsdrehkörper (20) mit einer Reibungsfeder (23) verbunden ist, die zwischen dem Reibungsdrehkörper (20) und dem Nabengehäuse (12) angeordnet ist.

10. Nabenschaltung nach einem der Ansprüche 3 bis 9,
wobei die Kupplungseinheit (17) einen Steuerring (24) aufweist, der mit dem Schaltmechanismus (14) gekoppelt ist und zur Kopplung mit und Entkopplung von dem Kraftübertragungs-Hilfsmechanismus (15) beweglich angeordnet ist.

11. Nabenschaltung nach Anspruch 10,
wobei der Steuerring (24) relativ zu der Nabenachse (10) drehbar und axial beweglich angeordnet ist.

12. Nabenschaltung nach Anspruch 11,
wobei der Steuerring (24) von einem Differential-Rotationskörper (25) gehaltert ist und der Steuerring (24) relativ zu dem Differential-Rotationskörper (25) rotationsbeweglich ist.

13. Nabenschaltung nach Anspruch 12,
wobei der Differential-Rotationskörper (25) relativ zu der Nabenachse (10) axial beweglich ist.

14. Nabenschaltung nach Anspruch 12 oder 13,
wobei der Steuerring (24) relativ zu dem Differential-Rotationskörper (25) axial festgelegt ist.

15. Nabenschaltung nach Anspruch 12 oder 13,
wobei der Steuerring (24) relativ zu dem Differential-Rotationskörper (25) axial beweglich ist.

16. Nabenschaltung nach einem der Ansprüche 12 bis 15,
wobei der Steuerring (24) und der Differential-Rotationskörper (25) Rotationsbegrenzungseinrichtungen (27a, 27b) aufweisen, die eine Rotationsbewegung des Steuerrings (24) stoppen.

17. Nabenschaltung nach einem der Ansprüche 10 bis 16,
wobei der Steuerring (24) in Umfangsrichtung und in Axialrichtung vorgespannt ist.

18. Nabenschaltung nach einem der Ansprüche 12 bis 17,
wobei die Kupplungseinheit (17) einen Kupplungsring (28) aufweist, der mit einem Planetenradträger (550) des Kraftübertragungsmechanismus (13) in Eingriff bringbar ist, wobei der Kupplungsring (7) und der Differential-Rotationskörper (25) gekoppelt und axial beweglich sind.

19. Verfahren zum Schalten einer Nabenschaltung eines Fahrrads, bei dem einer von einer Vielzahl von Kraftübertragungswegen eines Kraftübertragungsmechanismus (13) ausgewählt wird,
**dadurch gekennzeichnet,**
**daß** ein Kraftübertragungs-Hilfsweg während eines Schaltvorgangs mittels eines Kraftübertragungs-Hilfsmechanismus (15) hergestellt wird, der die Funktion einer Überbrückungseinrichtung hat, die die Übertragung von Rotationskraft von einem Antriebselement (11) zu einem Nabengehäuse (12) bei einem Schaltvorgang zwischen zwei Geschwindigkeitsstufen fortsetzt, so daß der Kraftübertragungsweg in einem im wesentlichen unbelasteten Zustand des Kraftübertragungsmechanismus (13) ausgewählt wird.

## Revendications

1. Changement de vitesse en moyeu pour une bicyclette, comprenant:
- un axe-moyeu (10);
- un moyen d'entraînement (11) supporté en rotation par l'axe-moyeu (10);
- une coque de moyeu (12) supportée en rotation par l'axe-moyeu (10);
- un mécanisme de transmission de puissance (13) disposé entre le moyen d'entraînement (11) et la coque de moyeu (12) pour communiquer une puissance de rotation depuis le moyen d'entraînement (11) vers la coque de moyeu (12) via une pluralité de trajets de transmission de puissance; et
- un mécanisme de changement (14) pour sélectionner l'un des trajets de transmission de la pluralité de trajets de transmission;
**caractérisé par**
un mécanisme auxiliaire de transmission de puissance (15) disposé entre le moyen d'entraînement (11) et la coque de moyeu (12) pour communiquer une puissance de rotation depuis le moyen d'entraînement (11) vers la coque de moyeu (12), tel que le mécanisme auxiliaire de transmission de puissance (15) est adapté à faire office de by-pass qui continue à transmettre une puissance de rotation depuis le moyen d'entraînement (11) vers la coque de moyeu (12) lors du passage entre deux étages de vitesse avec pour effet que le mécanisme de transmission de puissance (13) peut être passé dans un état non chargé.

2. Changement de vitesse en moyeu selon la revendication 1, **caractérisé en ce que** le mécanisme auxiliaire de transmission de puissance (15) est adapté à communiquer une puissance de rotation depuis le moyen d'entraînement (11) à la coque de moyeu (12) quand le mécanisme de transmission de puissance (13) est actionné pour changer le trajet de transmission de puissance.

3. Changement de vitesse en moyeu selon la revendication 1 ou 2,
dans lequel le mécanisme auxiliaire de transmission de puissance (15) comprend une unité de transmission de puissance (16) pour coupler le
moyen d'entraînement (11) à la coque de moyeu (12), et une unité d'embrayage (17) pour actionner l'unité de transmission de puissance (16).

4. Changement de vitesse en moyeu selon l'une quelconque des revendications 1 à 3,
dans lequel le mécanisme auxiliaire de transmission de puissance (15) comprend au moins un loquet (18) couplé au moyen d'entraînement (11) et un dispositif d'engagement de loquet, en particulier une bague à cliquet (17) couplée à la coque de moyeu (12), dans lequel le loquet (18) et le dispositif d'engagement de loquet, en particulier la bague à cliquet (19), sont susceptibles d'être engagés pour transmettre une puissance de rotation.

5. Changement de vitesse en moyeu selon la revendication 4,
dans lequel le loquet (18) est supporté mobile en rotation par le moyen d'entraînement (11).

6. Changement de vitesse en moyeu selon la revendication 4 ou 5,
dans lequel le loquet (18) est supporté axialement mobile par le moyen d'entraînement (11).

7. Changement de vitesse en moyeu selon la revendication 4 ou 5,
dans lequel le loquet (18) est axialement fixé sur le moyen d'entraînement (11).

8. Changement de vitesse en moyeu selon l'une quelconque des revendications 4 à 7,
dans lequel la bague à cliquet (19) comprend un corps de friction rotatif (20) incluant une pluralité de dents à cliquet (21) sur une surface périphérique intérieure (22) du corps de friction rotatif (20).

9. Changement de vitesse en moyeu selon la revendication 8,
dans lequel le corps de friction rotatif (20) est relié à un ressort de friction (23) disposé entre le corps de friction rotatif (20) et la coque de moyeu (12).

10. Changement de vitesse en moyeu selon l'une quelconque des revendications 3 à 9,
dans lequel l'unité d'embrayage (17) comprend une bague de commande (24) qui est couplée au mécanisme de passage (14) et disposée de façon mobile pour être couplée avec et découplée vis-à-vis du mécanisme auxiliaire de transmission de puissance (15).

11. Changement de vitesse en moyeu selon la revendication 10,
dans lequel la bague de commande (24) est disposée mobile en rotation et axialement par rapport à l'axe-moyeu (10).

12. Changement de vitesse en moyeu selon la revendication 11,
dans lequel la bague de commande (24) est supportée par un corps rotatif différentiel (25), et la bague de commande (24) est mobile en rotation par rapport au corps rotatif différentiel (25).

13. Changement de vitesse en moyeu selon la revendication 12,
dans lequel le corps rotatif différentiel (25) est axialement mobile par rapport à l'axe-moyeu (17).

14. Changement de vitesse en moyeu selon la revendication 12 ou 13,
dans lequel la bague de commande (24) est fixée axialement sur le corps rotatif différentiel (25).

15. Changement de vitesse en moyeu selon la revendication 12 ou 13,
dans lequel la bague de commande (24) est axialement mobile par rapport au corps rotatif différentiel (25).

16. Changement de vitesse en moyeu selon l'une quelconque des revendications 12 à 15,
dans lequel la bague de commande (24) et le corps rotatif différentiel (25) comprennent les moyens de limitation de rotation (27a, 27b) qui arrêtent un mouvement de rotation de la bague de commande (24).

17. Changement de vitesse en moyeu selon l'une quelconque des revendications 10 à 16,
dans lequel la bague de commande (24) est forcée dans une direction circonférentielle et dans une direction axiale.

18. Changement de vitesse en moyeu selon l'une quelconque des revendications 12 à 17,
dans lequel l'unité de commande (17) comprend une bague d'embrayage (28) susceptible d'être engagée avec un porte-planétaires (550) du mécanisme de transmission de puissance (13), et dans lequel la bague d'embrayage (17) et le corps rotatif différentiel (25) sont couplés et axialement mobiles.

19. Procédé pour le passage dans un changement de vitesse en moyeu d'une bicyclette,
dans lequel on sélectionne un trajet parmi une pluralité de trajets de transmission de puissance d'un mécanisme de transmission de puissance (13),
**caractérisé en ce qu'**un trajet auxiliaire de transmission de puissance est établi pendant le passage au moyen d'un mécanisme auxiliaire de transmission de puissance (15) qui fonctionne à la manière d'un by-pass qui continue à transmettre une puissance de rotation depuis un moyen d'entraînement (11) vers une coque de moyeu (12) lors du passage entre deux étages de vitesse de telle façon que le trajet de transmission de puissance est choisi dans un état sensiblement non chargé du mécanisme de transmission de puissance (13).
